# EUROPÄISCHE PATENTSCHRIFT

(11) **EP 3 450 134 B1**
(45) Veröffentlichungstag und Bekanntmachung des Hinweises auf die Patenterteilung: **10.03.2021**
(21) Anmeldenummer: 18192378.0
(22) Anmeldetag: 04.09.2018
(51) Int. Cl.: B29C 51/04, B29C 51/30

(54) **FORMSTATION FÜR EINE TIEFZIEHVERPACKUNGSMASCHINE UND VERFAHREN ZUM WECHSELN EINES FORMSTEMPELS**
MOULDING STATION FOR A DEEP DRAW PACKAGING MACHINE AND METHOD FOR REPLACING A STAMP
STATION DE FORMAGE POUR UNE EMBOUTISSEUSE-ENVELOPPEUSE SOUS PELLICULE ET PROCÉDÉ DE CHANGEMENT D'UN POINÇON DE FORMAGE

(30) Priorität: 05.09.2017 DE 102017120355
(43) Veröffentlichungstag der Anmeldung: 06.03.2019
(73) Patentinhaber: MULTIVAC Sepp Haggenmüller SE & Co. KG, 87787 Wolfertschwenden (DE)
(72) Erfinder: BRAUN, Jochen, 87746 Erkheim (DE); WANGER, Bastian, 87495 Pfronten (DE)
(74) Vertreter: Grünecker Patent- und Rechtsanwälte PartG mbB

(56) Entgegenhaltungen:
- EP-A1- 2 052 979
- EP-A1- 2 664 429
- DE-B3-102005 052 913
- DE-U1- 9 017 161
- DE-U1-202011 001 623

## Beschreibung

Die Erfindung bezieht sich auf eine Formstation gemäß dem Oberbegriff des Anspruchs 1 sowie auf ein Verfahren zum Wechseln eines Formstempels an einer Formstation.

Tiefziehverpackungsmaschinen verfügen über mindestens eine Formstation, in der mit einem Formwerkzeug Mulden in eine Verpackungsfolie, üblicherweise eine tiefziehfähige Kunststofffolie, tiefgezogen werden. Bei relativ dünnen Folien reicht das Anlegen eines Vakuums, um die Folie zu Mulden tiefzuziehen. Bei dickeren Folien wird häufig ein Formstempel eingesetzt, um das Verformen der Folie mechanisch zumindest zu unterstützen und den Formprozess auf diese Weise zu beschleunigen.

Die DE 10 2005 052 913 B3 offenbart ein Formwerkzeug zum Formen oder zum kombinierten Formen und Ausstanzen von Behältern aus einer Folienbahn aus thermoplastischem Kunststoff, während die DE 20 2011 001 623 U1 eine Druckgas-Thermoform-Vorrichtung zum Herstellen von Kunststoffbehältern aus thermoplastisch verformbaren Kunststofffolien oder -platten beschreibt.

Gelegentlich ist es wünschenswert, solche Formstempel auswechseln zu können, um Verpackungsmulden mit unterschiedlicher Geometrie oder verschiedene Formate mit unterschiedlicher Anordnung der Verpackungsmulden herstellen zu können. Eine gattungsgemäße Formstation, mit der ein solcher Wechsel eines Formstempels ermöglicht wird, geht aus der EP 2 052 979 B1 hervor.

Die Aufgabe der Erfindung besteht darin, das Auswechseln eines Formstempels an einer Formstation hinsichtlich seiner Handhabung und des anschließenden Betriebs der Formstation zu verbessern.

Gelöst wird diese Aufgabe mit einer Formstation mit den Merkmalen des Anspruchs 1 bzw. durch ein Verfahren mit den Merkmalen des Anspruchs 13. Vorteilhafte Weiterbildungen der Erfindung sind in den Unteransprüchen angegeben.

Die erfindungsgemäße Formstation zeichnet sich dadurch aus, dass an der Stempelhalteplatte mindestens ein Führungselement vorgesehen ist, das relativ zur Stempelhalteplatte verstellbar ist zwischen einer Eingriffsposition, in der das Führungselement in Eingriff mit einer zugeordneten Schiene an oder im Formdeckel bringbar ist, und einer Rückzugsposition, in der das Führungselement außer Eingriff mit der zugeordneten Schiene ist. Auf diese Weise kann die Stempelhalteplatte mit dem daran befestigten, mindestens einen Formstempel selektiv in Eingriff mit der Schiene gebracht und ebenfalls selektiv aus dem Eingriff mit der Schiene gelöst werden. Mit anderen Worten erlaubt die Erfindung im Unterschied zum Stand der Technik eine selektive Kopplung der Stempelhalteplatte mit der Schiene - und zwar auch dann, wenn sich die Stempelhalteplatte innerhalb des Formwerkzeugoberteils befindet. Dies wiederum bietet den Vorteil, dass die Schiene an der vom Stempelantrieb erzeugten Hubbewegung der Stempelplatte, mit der das Tiefziehen der Verpackungsmulden bewirkt wird, nicht mehr teilnimmt, sobald sich das eine oder die mehreren Führungselemente in ihrer Rückzugsposition befinden. Die Stempelhalteplatte mit dem daran befestigten, mindestens einen Formstempel braucht insbesondere nur noch dann mit der Schiene gekoppelt zu werden, wenn ein Wechsel der Stempelhalteplatte erfolgen soll, also möglicherweise wenige Male am Tag oder in der Woche. Im laufenden Betrieb der Formstation hingegen muss die Schiene nicht an der Hubbewegung der Stempelhalteplatte teilnehmen. Dies reduziert das Gewicht, das vom Stempelantrieb in oftmals mehreren Takten pro Minute bewegt werden muss, und entlastet so den Stempelantrieb.

Günstig ist es, wenn nicht nur an einer Seite der Stempelhalteplatte ein Führungselement vorgesehen ist, sondern wenn an einander gegenüberliegenden Seiten der Stempelhalteplatte jeweils oder mindestens ein Führungselement vorgesehen ist, das jeweils mit einer der betreffenden Seite zugeordneten Schiene in Eingriff bringbar ist. Auf diese Weise kann die Stempelhalteplatte mit dem ggf. recht schweren Formstempel beim Werkzeugwechsel auf zwei gegenüberliegenden Seiten getragen werden, was die Gewichtsverteilung verbessert und ein Verkanten der Stempelhalteplatte verhindert.

Zweckmäßig ist es, wenn die Führungselemente auf den einander gegenüberliegenden Seiten der Stempelhalteplatte jeweils synchron und gegensinnig zueinander bewegbar sind. Dies erlaubt es, auf beiden Seiten der Stempelhalteplatte gleichzeitig einen Eingriff mit der zugeordneten Schiene herzustellen oder zu lösen.

Jedes einzelne Führungselement kann zwischen seiner Eingriffsposition und seiner Rückzugsposition beispielsweise linear bewegbar, d.h. als Schieberelement ausgebildet sein. Alternativ wäre es denkbar, dass das Führungselement dazu konfiguriert ist, durch eine Drehbewegung zwischen seiner Eingriffsposition und seiner Rückzugsposition verstellt zu werden. Auch Überlagerungen von einer Linear- und einer Drehbewegung sind denkbar.

Zweckmäßig ist es, wenn das mindestens eine Führungselement mittels einer Feder in seine Eingriffsposition vorgespannt ist. Zum einen bietet dies einen Gewinn an Sicherheit, weil die FederVorspannung dafür sorgt, dass die Stempelhalteplatte über das Führungselement in Eingriff mit der Schiene gerät, sobald ein Antrieb der Führungselemente druck- oder stromlos wird, beispielsweise bei einem Stromausfall. Dies reduziert die Gefahr, dass die Stempelhalteplatte unkontrolliert herabfallen könnte. Zum anderen sorgt die Vorspannung mittels der Feder dafür, dass der Eingriff der Stempelhalteplatte mit der Schiene bestehen bleibt, während sich die Stempelhalteplatte entlang der Schienen bewegt. Des Weiteren bringt die Feder den Vorteil, dass ohne zusätzlichen Energieaufwand die Verriegelungsstellung eingenommen wird, z.B. im Falle eines Maschinen-Not-Aus.

Vorzugsweise weist das Formwerkzeugoberteil einen Mitnehmerantrieb auf, der konfiguriert ist zum Antreiben des mindestens einen Führungselements zumindest von seiner Eingriffsposition zu seiner Rückzugsposition, ggf. auch in umgekehrter Richtung. Wenn eine Vorspannung des Führungselements hin zu seiner Eingriffsposition vorhanden ist, bewirkt der Mitnehmerantrieb folglich zumindest die Bewegung des Führungselements zurück aus der Eingriffsposition.

In einer besonders einfachen und damit vorteilhaften Variante ist ein gemeinsamer Mitnehmerantrieb für eine Mehrzahl von Führungselementen oder sogar für alle Führungselemente vorgesehen. Dies erleichtert im Übrigen auch eine Synchronisierung der Bewegung der Führungselemente. Zusätzlich erhöht es die Sicherheit der Verriegelungsfunktion bei Ausfall eines Führungselementes.

Der Mitnehmerantrieb kann beispielsweise an oder in einer Basisplatte angeordnet sein, mit der die Stempelhalteplatte zur antriebsmäßigen Verbindung mit dem Stempelantrieb lösbar verbindbar ist. Dies hat den Vorteil, dass der Mitnehmerantrieb in der Formstation verbleiben und für verschiedene Stempelhalteplatten verwendet werden kann, wenn diese gegeneinander ausgetauscht werden. Es muss also nicht jede Stempelhalteplatte ihren eigenen Mitnehmerantrieb für die an ihr vorgesehenen Mitnehmer mitbringen.

Denkbar ist es, dass der Mitnehmerantrieb mindestens einen Mitnehmerriegel umfasst, der dazu konfiguriert ist, in eine Öffnung eines Führungselements einzutauchen und dieses in seiner Bewegung mitzunehmen. Auf diese Weise kann eine temporäre Kopplung des Mitnehmerantriebs mit dem Führungselement erfolgen, ohne dass beide dauerhaft miteinander verbunden sein müssen. Dies wiederum erleichtert das Lösen der Stempelhalteplatte vom Formwerkzeugoberteil.

In einer besonders bevorzugten Variante der Erfindung ist am Formwerkzeugoberteil, vorzugsweise an der Basisplatte, eine Kulisse vorhanden, die konfiguriert ist zu einem Anheben des Mitnehmerriegels bei einem Ausfahren des Mitnehmerriegels und/oder zu einem Absenken des Mitnehmerriegels bei einem Einfahren desselben. Mit anderen Worten setzt die Kulisse eine (Linearoder Schwenk-) Bewegung des Mitnehmerriegels um in eine damit überlagerte Hub- oder Senkbewegung. Dabei erlaubt es ein Absenken des Mitnehmerriegels beispielsweise, dass der Mitnehmerriegel in die Öffnung des zugeordneten Führungselements eintaucht. Umgekehrt ermöglicht das Anheben des Mitnehmerriegels das Lösen dieses Mitnehmerriegels aus der Öffnung des Führungselements.

Bei einer solchen Konfiguration kann der Mitnehmerantrieb einen Kolbenantrieb aufweisen, der bewegungsmäßig bzw. in seiner vertikalen Lage an das Anheben und/oder Absenken des mindestens einen Mitnehmerriegels gekoppelt ist. Dies hat den Vorteil, dass die Verbindung zwischen dem Kolbenantrieb und dem Mitnehmerriegel mechanisch besonders einfach gestaltet werden kann, insbesondere ohne ein Getriebe.

Als günstig hat es sich erwiesen, wenn die Stempelhalteplatte eine Aussparung aufweist, in der das Mitnehmerelement in seiner Rückzugsposition aufgenommen ist. Eine solche Aussparung kann für jedes Mitnehmerelement vorgesehen sein. Besonders zweckmäßig ist es, wenn das Mitnehmerelement in seiner Rückzugsposition nicht mehr über eine Außenkontur der Stempelplatte seitlich hinaus steht. Auf diese Weise wird gewährleistet, dass das Führungselement die vom Stempelantrieb induzierte Hubbewegung der Stempelplatte nicht beeinträchtigen kann.

Die Erfindung bezieht sich nicht nur auf eine Formstation selbst, sondern auch auf eine Tiefziehverpackungsmaschine mit einer solchen Formstation.

Die Erfindung bezieht sich ferner auf ein Verfahren zum Wechseln eines an einer Stempelhalteplatte befestigten Formstempels an einem Formwerkzeugoberteil einer Formstation, wobei die Formstation insbesondere zu einer Tiefziehverpackungsmaschine gehören kann. Das Verfahren umfasst dabei zumindest die folgenden Schritte:
- Ausfahren mindestens eines an einer ersten Stempelhalteplatte vorgesehenen Führungselements in eine Eingriffsposition, in der das Führungselement in Eingriff steht mit einer an oder in einem Formdeckel des Formwerkzeugoberteils vorgesehenen Schiene, während sich die erste Stempelhalteplatte in einer Bereitschaftsposition innerhalb der Formstation befindet,
- Bewegen der ersten Stempelhalteplatte entlang der Schiene bis in eine Entnahmeposition,
- Entnehmen der ersten Stempelhalteplatte von der Formstation,
- Einsetzen einer zweiten Stempelhalteplatte mit mindestens einem daran befestigten Formstempel in die Schiene an der Entnahmeposition, so dass sich mindestens ein an der zweiten Stempelhalteplatte vorgesehenes Führungselement in einer Eingriffsposition im Eingriff mit der Schiene befindet,
- Bewegen der zweiten Stempelhalteplatte entlang der Schiene bis in die Bereitschaftsposition innerhalb der Formstation,
- Befestigen der zweiten Stempelhalteplatte an einer Basisplatte des Formwerkzeugoberteils,
- Nach dem Befestigen der zweiten Stempelhalteplatte an der Basisplatte: Einfahren des mindestens einen an der zweiten Stempelhalteplatte vorgesehenen Führungselements in eine außerhalb der Schiene befindliche Rückzugsposition.

Dieses Verfahren zum Wechseln des Formstempels sieht folglich analog zur beanspruchten Formstation vor, dass die Stempelhalteplatte mittels des mindestens einen Führungselements selektiv mit der Schiene am Formdeckel gekoppelt oder von dieser gelöst wird. In dem mit der Schiene gekoppelten Zustand kann die Stempelhalteplatte entlang der als Führung dienenden Schiene aus der Formstation herausbewegt werden oder umgekehrt in ihre Bereitschaftsposition innerhalb der Formstation gebracht werden. Wird in der Bereitschaftsposition die Kopplung zwischen der Stempelhalteplatte und der Schiene durch Verstellen der Führungselemente in ihre Rückzugsposition gelöst, behindert dieser Eingriff nicht länger eine anschließende Hubbewegung der Stempelhalteplatte, die zum Tiefziehen eines Verpackungsmaterials eingesetzt wird. Ein besonderer Vorteil des Verfahrens liegt darin, dass die Schiene dank der Entkopplung nicht an der Hubbewegung des Formstempels teilnehmen muss.

Wie bereits im Zusammenhang mit der Erläuterung der Formstation ausgeführt, kann es vorteilhaft sein, wenn an gegenüberliegenden Seiten der ersten oder der zweiten Stempelhalteplatte vorgesehene Führungselemente jeweils synchron zueinander bewegt werden.

Zwischen seiner Eingriffsposition und seiner Rückzugsposition kann jedes Führungselement entweder linear oder rotatorisch relativ zur Stempelhalteplatte bewegt werden. Denkbar wäre auch die Überlagerung einer Linear- und einer Drehbewegung.

Merkmale, die im Zusammenhang mit der beanspruchten Formstation beschriebenen sind, können einzeln oder gemeinsam auch im erfindungsgemäßen Verfahren verwirklicht werden, und umgekehrt.

Im Folgenden wird ein vorteilhaftes Ausführungsbeispiel der Erfindung anhand einer Zeichnung näher erläutert. Im Einzelnen zeigen:
- Fig. 1: eine schematische Seitenansicht eines Ausführungsbeispiels einer erfindungsgemäßen Tiefziehverpackungsmaschine,
- Fig. 2: eine schematische Darstellung der Formstation mit einem Wechsel des Formstempels,
- Fig. 3: einen Vertikalschnitt durch die Formstation an der in Figur 2 mit III bezeichneten Stelle,
- Fig. 4: eine vereinfachte Darstellung entsprechend Figur 3 mit einem zurückgezogenen Führungselement,
- Fig. 5: eine perspektivische Ansicht der Stempelhalteplatte mit einem in seiner Rückzugsposition befindlichen Führungselement,
- Fig. 6: eine perspektivische Ansicht entsprechend Figur 5 mit in seiner Eingriffsposition befindlichem Führungselement.

Gleiche Komponenten sind in den Figuren durchgängig mit gleichen Bezugszeichen versehen worden.

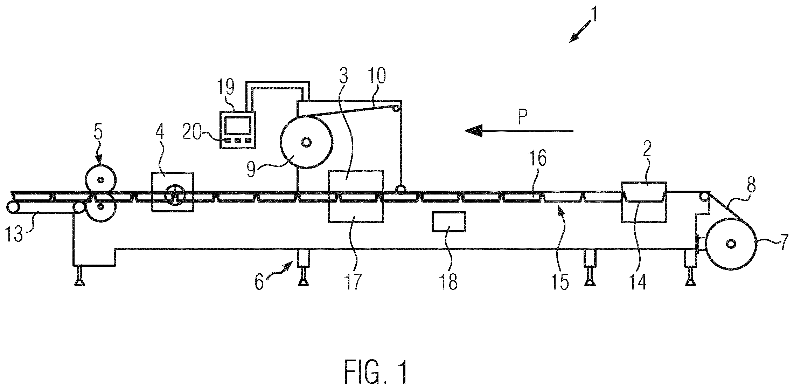

Figur 1 zeigt in einer schematischen Seitenansicht eine Tiefziehverpackungsmaschine 1. Diese Tiefziehverpackungsmaschine 1 weist eine Formstation 2, eine Siegelstation 3, eine Querschneideeinrichtung 4 und eine Längsschneideeinrichtung 5 auf, die in dieser Reihenfolge in einer Produktionsrichtung P an einem Maschinengestell 6 angeordnet sind. Eingangsseitig befindet sich an dem Maschinengestell 6 eine Zufuhrrolle 7, von der eine Folie 8 abgezogen wird. Im Bereich der Siegelstation 3 ist ein Materialspeicher 9 vorgesehen, von dem eine Deckelfolie 10 abgezogen wird. Ausgangsseitig ist an der Verpackungsmaschine eine Abfuhreinrichtung 13 in Form eines Transportbandes vorgesehen, mit der fertige, vereinzelte Verpackungen abtransportiert werden. Ferner weist die Verpackungsmaschine 1 eine nicht dargestellte Vorschubeinrichtung auf, die Folie 8 ergreift und diese intermittierend pro Hauptarbeitstakt in der Produktionsrichtung P weitertransportiert. Die Vorschubeinrichtung kann zum Beispiel durch beidseitig angeordnete Transportketten ausgeführt sein.

In der dargestellten Ausführungsform ist die Formstation 2 als eine Tiefziehstation ausgebildet, bei der in die Folie 8 durch Tiefziehen Mulden 14 geformt werden. Dabei kann die Formstation 2 derart ausgebildet sein, dass in der Produktionsrichtung P und/oder in der Richtung senkrecht zur Produktionsrichtung P mehrere Mulden nebeneinander gebildet werden. In Produktionsrichtung P hinter der Formstation 2 ist eine Einlegestrecke 15 vorgesehen, in der die in der Folie 8 geformten Mulden 14 mit einem Produkt 16 befüllt werden.

Die Siegelstation 3 verfügt über eine verschließbare Kammer 17, in der die Atmosphäre in den Mulden 14 vor dem Versiegeln zum Beispiel durch Gasspülen mit einem Austauschgas oder mit einem Gasgemisch ersetzt werden kann.

Die Querschneideeinrichtung 4 ist als Stanze ausgebildet, die die Folie 8 und die Deckelfolie 10 in einer Richtung quer zur Produktionsrichtung P zwischen benachbarten Mulden 14 durchtrennt. Dabei arbeitet die Querschneideeinrichtung 4 derart, dass die Folie 8 nicht über die gesamte Breite aufgetrennt wird, sondern zumindest in einem Randbereich nicht durchtrennt wird. Dies ermöglicht einen kontrollierten Weitertransport durch die Vorschubeinrichtung.

Die Längsschneideeinrichtung 5 ist in der dargestellten Ausführungsform als eine Messeranordnung ausgebildet, mit der die Folie 8 und die Deckelfolie 10 zwischen benachbarten Mulden 14 und am seitlichen Rand der Folie 8 durchtrennt werden, so dass hinter der Längsschneideeinrichtung 5 vereinzelte Verpackungen vorliegen.

Die Verpackungsmaschine 1 verfügt ferner über eine Steuerung 18. Sie hat die Aufgabe, die in der Verpackungsmaschine 1 ablaufenden Prozesse zu steuern und zu überwachen. Eine Anzeigevorrichtung 19 mit Bedienelementen 20 dient zum Visualisieren bzw. zum Beeinflussen der Prozessabläufe in der Verpackungsmaschine 1 für bzw. durch einen Bediener.

Die generelle Arbeitsweise der Tiefziehverpackungsmaschine 1 wird im Folgenden kurz beschrieben.

Die Folie 8 wird von der Zufuhrrolle 7 abgezogen und durch die Vorschubeinrichtung in die Formstation 2 transportiert. In der Formstation 2 werden durch Tiefziehen Mulden 14 in die Folie 8 gebildet. Die Mulden 14 werden zusammen mit dem umgebenden Bereich der Folie 8 in einem Hauptarbeitstakt, der einem Vorschub um ein Format entspricht, zu der Einlegestrecke 15 weitertransportiert. Während der Vorschubbewegung oder bei stillstehendem Vorschub wird ein Produkt 16 in die Mulden 14 eingelegt.

Anschließend werden die befüllten Mulden 14 in einem nachfolgenden Hauptarbeitstakt durch die Vorschubeinrichtung zur Siegelstation 3 weitertransportiert.

In der Siegelstation 3 können die Mulden optional evakuiert und/oder mit einem Schutzgas begast werden, bevor die Deckelfolie 10 auf die Mulden 14 gesiegelt wird, um die Mulden 14 hermetisch zu schließen. Die Quer- und Längsschneideeinrichtungen 4, 5 sorgen für eine Vereinzelung der Mulden, die schließlich auf der Abfuhreinrichtung 13 forttransportiert werden.

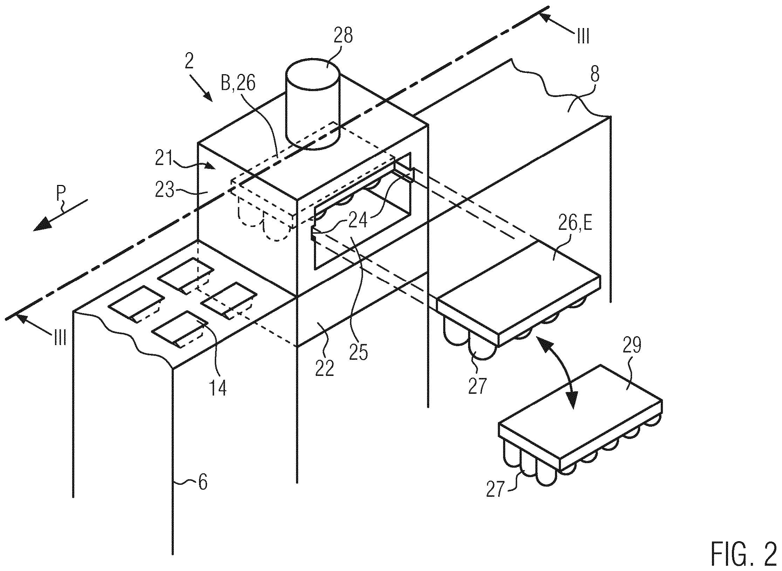

Figur 2 zeigt schematisch eine perspektivische Ansicht der Formstation 2. Die Formstation 2 verfügt über ein Formwerkzeugoberteil 21 und ein Formwerkzeugunterteil 22. Das Formwerkzeugoberteil 21 ist vertikal über dem Formwerkzeugunterteil 22 angeordnet und umfasst einen Formdeckel 23, der als nach unten offenes Gehäuse ausgebildet ist. An zwei einander gegenüberliegenden Innenseiten des Formdeckels 23 ist jeweils eine horizontal und quer zur Produktionsrichtung P verlaufende Schiene 24 vorgesehen. Eine seitliche Öffnung 25 am Formdeckel 23 ist im Betrieb der Formstation 2 mit einer Verdeckung (nicht dargestellt) verschlossen. Die Verdeckung kann weggeschwenkt oder abgenommen werden, um die seitliche Öffnung 25 freizulegen und den Zugang zum Innenraum des Formdeckels 2 zu ermöglichen.

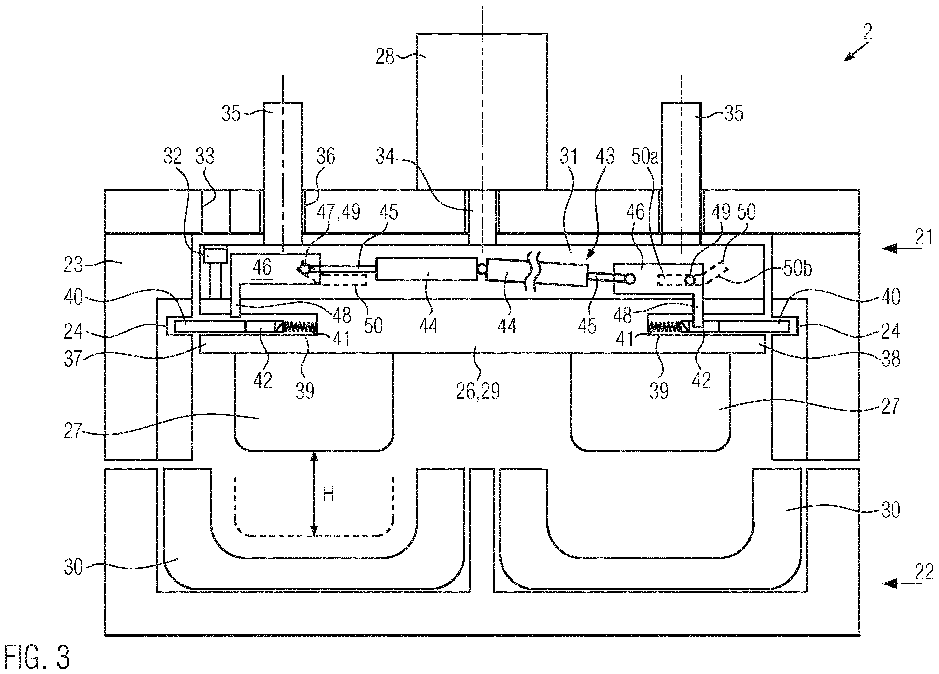

Im Innenraum des Formdeckels 23 des Formwerkzeugoberteils 21 ist eine erste Stempelhalteplatte 26 aufgenommen. An der Stempelhalteplatte 26 ist mindestens ein nach unten abstehender Formstempel 27 befestigt. Im vorliegenden Ausführungsbeispiel weist die erste Stempelhalteplatte beispielsweise acht in einem 2x4-Format angeordnete Formstempel 27 auf. In einer gestrichelt dargestellten Bereitschaftsposition B befindet sich die erste Stempelhalteplatte 26 im Inneren des Formdeckels 23 und kann in dieser Bereitschaftsposition B selektiv antriebsmäßig mit einem Stempelantrieb 28 verbunden werden. Der Stempelantrieb 28 kann beispielsweise als Pneumatik-Antrieb oder als Servo-Antrieb ausgebildet sein und dient zum Erzeugen einer Hubbewegung H der Stempelhalteplatte 26 innerhalb der Formstation 2 (s. Figur 3), um durch das Eintauchen der Formstempel 27 in die Folie 8 ein Tiefziehen der Verpackungsmulden 14 zu erzeugen oder zu unterstützen. Der Stempelantrieb 28 ist im dargestellten Ausführungsbeispiel auf der Oberseite des Formdeckels 23 montiert.

Um einen Wechsel der ersten Stempelplatte 26 gegen eine zweite Stempelplatte 29 mit einer anderen Anzahl, Form oder Anordnung von an ihr befestigten Formstempeln 27 zu ermöglichen, kann die erste Stempelplatte 26 aus ihrer Bereitschaftsposition B in eine Entnahmeposition E gebracht werden. Zu diesem Zweck wird die erste Stempelhalteplatte 26, wie weiter unten erläutert werden wird, entlang der Schienen 24 aus der Formstation 2 herausgezogen. Nachdem die erste Stempelhalteplatte 26 an der Entnahmeposition E entnommen wurde, kann die zweite Stempelhalteplatte 29 an der Entnahmeposition E in die Schienen 24 eingesetzt und entlang der Schienen 24 in die Bereitschaftsposition B im Inneren des Formdeckels 23 verschoben werden.

Figur 3 zeigt in einem Horizontalschnitt weitere Details der Formstation 2. Das Formwerkzeugunterteil 22 umfasst austauschbare Formeinsätze 30, in die die Folie 8 durch Anlegen eines Unterdrucks sowie durch das Zusammenwirken mit dem Formstempel 27 tiefgezogen wird. Die Formeinsätze 30 können beim Wechsel der Stempelhalteplatte 26, 29 gegen andere Formeinsätze ausgetauscht werden, um die Form und/oder Anordnung der von der Formstation 2 erzeugten Mulden 14 zu ändern. Das Formwerkzeugunterteil 22 kann mittels eines Hubwerks (nicht dargestellt) von unten an die Folie 8 herangeführt werden, um diese gegen das Formwerkzeugoberteil 21 zu klemmen, bevor der Tiefziehvorgang beginnt.

Oberhalb der Stempelhalteplatte 26, 29 befindet sich im Formdeckel 23 eine auch bei einem Wechsel der Stempelhalteplatte in der Formstation 2 verbleibende Basisplatte 31. Ein Befestigungsmittel 32, hier beispielsweise in Form einer Schraube, stellt eine lösbare Verbindung der Stempelhalteplatte 26, 29 mit der Basisplatte 31 her, bei der die Stempelhalteplatte 26, 29 an der Basisplatte 31 anliegt. Das Befestigungsmittel 32 (von dem durchaus mehrere vorgesehen sein können) ist durch eine Zugangsöffnung 33 im Formdeckel 23 von außen zugänglich, um die Verbindung der Stempelhalteplatte 26, 29 mit der Basisplatte 31 herzustellen oder lösen zu können.

Der auf der Oberseite des Formdeckels 23 angeordnete Stempelantrieb 28 ist über eine den Formdeckel 23 durchsetzende Antriebsverbindung 34 derart dauerhaft mit der Basis 31 verbunden, dass über die Antriebsverbindung 34 eine vom Stempelantrieb 28 erzeugte Bewegung auf eine Hubbewegung der Basisplatte 31 innerhalb des Formdeckels 23 übertragen wird. Während die Stempelhalteplatte 26, 29 mit der Basisplatte 31 verbunden ist, nimmt die Stempelhalteplatte 26, 29 und damit auch der an ihr befestigte, mindestens eine Formstempel 27 an der Hubbewegung teil. Von der Oberseite der Basisplatte 31 stehen Führungsstangen 35 nach oben ab, die passend ausgebildete, z.B. kongruent geformte Führungsöffnungen 36 in dem Formdeckel 23 durchsetzen. Während der Hubbewegung der Basisplatte 31 verhindern die Führungen 35 durch den Eingriff mit den zugeordneten Führungsöffnungen 36 ein Verkanten der Basisplatte 31 und der mit ihr verbundenen Stempelhalteplatte 26, 29, sorgen also für eine möglichst reine Vertikalbewegung der Stempelhalteplatte 26, 29 und der daran befestigten Formstempel 27.

Auf zwei einander gegenüberliegenden Seiten 37, 38 weist die Stempelhalteplatte 26, 29 jeweils eine Aussparung 39 auf. In jeder Aussparung 39 ist jeweils ein Führungselement 40 aufgenommen und relativ zu der Stempelhalteplatte 26, 29 beweglich an dieser gelagert. Im vorliegenden Ausführungsbeispiel sind die Führungselemente 40 konfiguriert zum Ausführen einer Linearbewegung relativ zur Stempelhalteplatte 26, 29, und zwar in oder gegen die Produktionsrichtung P, wenn sich die Stempelhalteplatte 26, 29 in ihrer Bereitschaftsposition B befindet. Die Führungselemente 40 sind im vorliegenden Ausführungsbeispiel folglich als eine Art Schieber ausgebildet.

In der Situation in Figur 3 befindet sich die Stempelhalteplatte 26, 29 in ihrer Bereitschaftsposition B. In dieser Bereitschaftsposition B befinden sich die Führungselemente 40 auf Höhe der Schienen 24, die an der Innenseite des Formdeckels 23 ausgebildet ist. Jedem der beiden Führungselemente 40 ist dabei jeweils eine Schiene 24 zugeordnet.

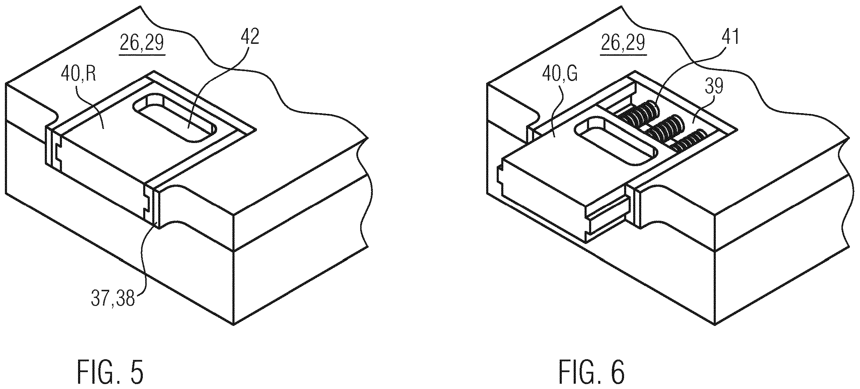

Innerhalb jeder Aussparung 39 befinden sich jeweils eine oder mehrere Federn 41, hier speziell Druckfedern 41, die das jeweilige Führungselement 40 vorspannen in seine über die Seite 37, 38 der Stempelhalteplatte 26, 29 hinaus vorstehende Eingriffsposition G, in der die beiden Führungselemente 40 in Figur 3 dargestellt sind. Wie später anhand von Figur 6 sichtbar werden wird, können beispielsweise drei parallel zueinander ausgerichtete Federn 41 für jedes Führungselement 40 vorgesehen sein. Die von den Federn 41 ausgeübte Vorspannung bedeutet einen Gewinn an Sicherheit, weil sie die Führungselemente 40 in die die Stempelhalteplatte 37 sichernde Eingriffsposition G mit den Schienen 24 bringt, wenn die Energiezufuhr zur Formstation 2 unterbrochen werden sollte.

Die Führungselemente 40 sind im dargestellten Ausführungsbeispiel jeweils plattenförmig ausgebildet. Sie weisen eine Vertiefung oder, wie im dargestellten Ausführungsbeispiel, sogar eine durchgehende Öffnung 42 auf.

An oder in der Basisplatte 31 ist ein Mitnehmerantrieb 43 vorgesehen, der zum Antreiben des mindestens einen Führungselements 40 zumindest von dessen Eingriffsposition G zu seiner Rückzugsposition R konfiguriert ist. Während prinzipiell für jedes Führungselement 40 ein eigener Mitnehmerantrieb 43 (oder ein anderer Antrieb) vorgesehen sein könnte, ist im vorliegenden Ausführungsbeispiel ein gemeinsamer Mitnehmerantrieb 43 für sämtliche Führungselemente 40 vorgesehen. Dieser Mitnehmerantrieb 43 umfasst einen Kolbenantrieb 44 mit wenigstens einer im Wesentlichen horizontal beweglichen Kolbenstange 45. Die Kolbenstange 45 ist an ihrem äußeren Ende mit einem Mitnehmerriegel 46 gekoppelt, beispielweise an einem Gelenkpunkt 47. Der Mitnehmerriegel 46 weist einen nach unten abgewinkelten Mitnehmerhaken 48 auf. Dieser ist dazu konfiguriert und dimensioniert, temporär zum Mitnehmen des Führungselements 40 in die Öffnung 42 des zugeordneten Führungselements 40 einzutauchen und sich wieder aus dieser Öffnung 42 zu lösen.

Vom Mitnehmerriegel 46 ragt seitlich ein Bolzen 49 quer zur Produktionsrichtung P nach außen vor, d.h. in Figur 3 in die Zeichnungsebene hinein oder aus der Zeichnungsebene heraus. Der Bolzen 49 kann sich, wie am linken Mitnehmerriegel 46 gezeigt, am Gelenkpunkt 47 befinden, oder - wie am rechten Mitnehmerriegel 46 gezeigt - an anderer Stelle am Mitnehmerriegel 46. Der Bolzen 49 ragt in eine Kulisse 50 hinein, die an der Basisplatte 31 ausgebildet ist. Die Kulisse 50 umfasst jeweils einen horizontalen Abschnitt 50a und einen sich daran anschließenden, nach außen ansteigenden Abschnitt 50b.

In Figur 3 ist der Kolbenantrieb 44 des Mitnehmerantriebs 43 links in seiner gestreckten Position dargestellt, in der die Kolbenstange 45 nach außen gefahren ist. Der Bolzen 49 befindet sich am höchsten Punkt des ansteigenden Abschnitts 50b der Kulisse 50. Dies führt dazu, dass sich der Mitnehmerriegel 46 in der Darstellung links in seiner maximal angehobenen Position befindet, in der sein Mitnehmerhaken 48 nicht mehr in Eingriff steht mit der Öffnung 42 im zugehörigen Führungselement 40.

Wird der Kolbenantrieb 44 nun zusammengezogen, bewegt sich der Bolzen 49 entlang der Kulisse 50 nach innen. Während der Bewegung des Bolzens 49 entlang des ansteigenden Abschnitts 50b senkt sich der Bolzen 49 und damit auch der mit ihm verbundene Mitnehmerriegel 46 ab, sodass - wie in Figur 3 rechts dargestellt - der Mitnehmerhaken 48 in Eingriff gelangt mit der Öffnung 42 des zugeordneten Führungselements 40. Wird nun der Kolbenantrieb 44 weiter kontrahiert, bewegt sich der Mitnehmerriegel 46 horizontal nach innen, während sein Bolzen 49 sich entlang des horizontalen Abschnitts 50a der Kulisse 50 bewegt. Dabei nimmt der Mitnehmerhaken 48 das Führungselement entgegen der Vorspannung der Feder 41 mit und bewegt das Führungselement 40 auf diese Weise von der Eingriffsposition G in die Rückzugsposition R. In der Rückzugsposition R befindet sich das Führungselement 40 vollkommen außer Eingriff mit der zugeordneten Schiene 24.

Mittels des ansteigenden Abschnitts 50b ist die Kulisse 50 konfiguriert zum Anheben des Mitnehmerriegels 46 bei einem Ausfahren des Mitnehmerriegels 46 sowie zu einem Absenken des Mitnehmerriegels 46 bei einem Einfahren des Mitnehmerriegels 46. Der Kolbenantrieb 44 ist dabei derart an der Basisplatte 31 gelagert, dass er relativ zu dieser in seiner vertikalen Lage veränderlich ist. Insbesondere ist der Kolbenantrieb 44 bewegungsmäßig, d.h. in seiner Lage, an das Anheben und/oder Absenken des mindestens einen Mitnehmerriegels 46 gekoppelt. Wenn sich der Mitnehmerriegel 46 in einer angehobenen Position befindet (links dargestellt), befindet sich folglich auch der Kolbenantrieb 44 oder zumindest dessen Kolbenstange 45 in einer höheren Position relativ zur Basisplatte 31 als in einer kontrahierten Stellung des Kolbenantriebs 44 (rechts dargestellt).

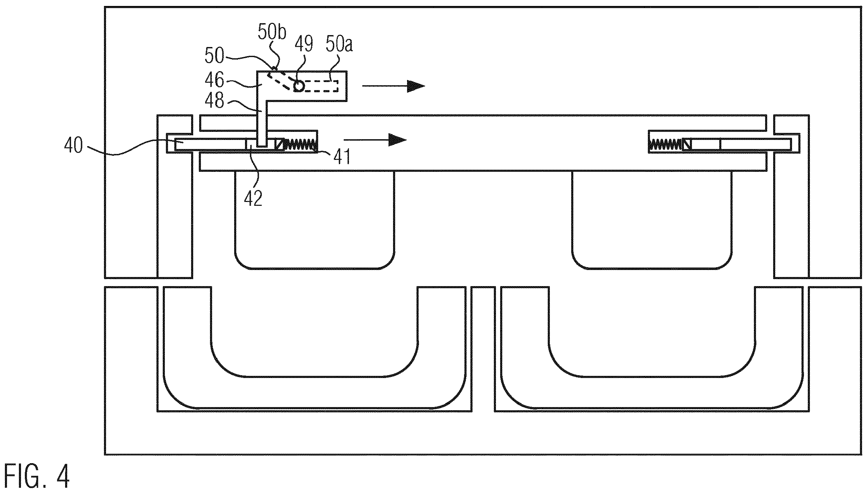

Figur 4 zeigt eine vereinfachte Darstellung entsprechend Figur 3, bei der während des Kontrahierens des Kolbenantriebs 44 der Bolzen 49 den Übergang vom ansteigenden Abschnitt 50b zum horizontalen Abschnitt 50a der Kulisse 50 erreicht hat. Zu diesem Zeitpunkt ist der Mitnehmerhaken 48 des Mitnehmerriegels 46 in die Öffnung 42 im Führungselement 40 eingetaucht. Er wird nun bei dem weiteren Zusammenziehen des Kolbenantriebs 44 das Führungselement 40 entgegen der Kraft der Feder 41 nach rechts bewegen.

Figur 5 zeigt das in der Aussparung 39 in der Stempelhalteplatte 26, 29 aufgenommene Führungselement 40 in seiner Rückzugsposition R. In dieser Rückzugsposition R steht das Führungselement 40 nicht oder allenfalls nur noch sehr geringfügig über die äußere Seite 37, 38 der Stempelhalteplatte 26, 29 hinaus vor. Das Führungselement 40 ist nicht höher als die Aussparung 39, steht also auch nach oben nicht über die Stempelhalteplatte 26, 29 hinaus vor.

Figur 6 zeigt das Führungselement 40 in seiner Eingriffsposition G, in der es - bedingt durch die Kraft der drei Druckfedern 41 - nach außen ausgefahren ist und nun über die Seite 37, 38 der Stempelhalteplatte 26, 29 hinaus vorsteht. In dieser Eingriffsposition G kann das Führungselement 40 in Eingriff mit der Schiene 24 stehen. Befindet sich die Stempelhalteplatte 26, 29 zu diesem Zeitpunkt in ihrer Bereitschaftsposition B innerhalb der Formstation 2, kann sie nach dem Öffnen der seitlichen Öffnung 25 entlang der Schienen 24 nach außen gezogen werden bis in eine Entnahmeposition E, in der sie von der Formstation 2 entfernbar ist. Anschließend kann eine andere Stempelhalteplatte 26, 29 mit in Eingriffsposition G befindlichen Führungselementen 40 in die Schienen 24 eingesetzt und anschließend entlang der Schienen 24 bis in die Bereitschaftsposition B innerhalb der Formstation 2 bewegt werden, wie in Figur 2 gezeigt. In der Bereitschaftsposition B sind die Befestigungsmittel 32 durch die Zugangsöffnungen 33 zugänglich und können angezogen werden, um die Stempelhalteplatte 26, 29 mit der Basisplatte 31 zu verbinden.

Anschließend werden die Führungselemente in ihre außerhalb der Schienen 24 befindliche Rückzugsposition R gebracht. Dies geschieht durch Kontrahieren des Kolbenantriebs 44 des Mitnehmerantriebs 43 und das dadurch bewirkte Einfahren der Mitnehmerriegel 46 in die Öffnung 42 der zugeordneten Führungselemente 40. Sobald die Mitnehmerhaken 48 der Mitnehmerriegel 46 mit den Öffnungen 42 in Eingriff stehen, werden die Führungselemente 40 nach innen bewegt, gegen die Kraft der Feder 41, und so in ihre Rückzugsposition R gebracht. Nachdem die Führungselemente 40 nicht mehr in Eingriff stehen mit den Schienen 24, kann die Stempelhalteplatte 26, 29 eine vom Stempelantrieb 28 erzeugte Hubbewegung H ausführen, ohne dass die Schienen 24 daran teilnehmen.

Ausgehend von dem vorstehend beschriebenen Ausführungsbeispiel kann die Erfindung in vielfacher Hinsicht abgewandelt oder ergänzt werden. Beispielsweise ist es denkbar, dass die Schienen 24 als Teleskopschienen ausgebildet werden, die beim Wechseln eines Werkzeugs seitlich aus der Formstation 2 herausgezogen werden. Dies könnte eine sichere Führung der Stempelhalteplatte von der Bereitschaftsposition zur Entnahmeposition und zurück unterstützen. Denkbar wäre es auch, Positionssensoren vorzusehen, die das Einnehmen definierter Positionen beispielsweise durch die Stempelhalteplatte, die Führungselemente oder den Antrieb für die Führungselemente erkennen. Dies wiederum ermöglicht Sicherheitsabfragen, die den Betrieb der Formstation erst dann erlauben, wenn die überwachten Komponenten ihre definierte Position eingenommen haben. Mittels der Positionssensoren kann beispielsweise erkannt werden, ob sich die Stempelhalteplatte in ihrer Bereitschaftsposition befindet, oder ob sich die Führungselemente in ihrer Rückzugsposition befinden, in der sie außer Eingriff mit der Schiene 24 stehen, sodass die Hubbewegung der Stempelhalteplatte freigegeben wird.

## Patentansprüche

1. Formstation (2) für eine Tiefziehverpackungsmaschine (1), mit einem einen Formdeckel (23) aufweisenden Formwerkzeugoberteil (21) und einem Formwerkzeugunterteil (22), wobei das Formwerkzeugoberteil (21) eine Stempelhalteplatte (26, 29) mit mindestens einem daran befestigten Formstempel (27) aufweist, die entlang mindestens einer an oder in dem Formdeckel (23) vorgesehenen Schiene (24) verschiebbar ist,
und wobei die Formstation (2) einen Stempelantrieb (28) aufweist, der antriebsmäßig verbunden ist mit der Stempelhalteplatte (26, 29) zum Erzeugen einer Hubbewegung (H) der Stempelhalteplatte (26, 29) relativ zum Formdeckel (23),
**dadurch gekennzeichnet, dass** an der Stempelhalteplatte (26, 29) mindestens ein Führungselement (40) vorgesehen ist, das relativ zur Stempelhalteplatte (26, 29) verstellbar ist zwischen einer Eingriffsposition (G), in der das Führungselement (40) in Eingriff mit einer zugeordneten Schiene (24) bringbar ist, und einer Rückzugsposition (R), in der das Führungselement (40) außer Eingriff mit der zugeordneten Schiene (24) ist.

2. Formstation nach Anspruch 1, **dadurch gekennzeichnet, dass** an einander gegenüberliegenden Seite (37, 38) der Stempelhalteplatte (26, 29) jeweils ein Führungselement (40) vorgesehen ist, das jeweils mit einer zugordneten Schiene (24) in Eingriff bringbar ist.

3. Formstation nach Anspruch 2, **dadurch gekennzeichnet, dass** die Führungselemente (40) auf den einander gegenüberliegenden Seiten (37, 38) der Stempelhalteplatte (26, 29) jeweils synchron und gegensinnig zueinander bewegbar sind.

4. Formstation nach einem der vorangehenden Ansprüche, **dadurch gekennzeichnet, dass** das mindestens eine Führungselement (40) mittels einer Feder (41) vorgespannt ist in seine Eingriffsposition (G).

5. Formstation nach einem der vorangehenden Ansprüche, **dadurch gekennzeichnet, dass** das Formwerkzeugoberteil (21) einen Mitnehmerantrieb (43) aufweist, der konfiguriert ist zum Antreiben des mindestens einen Führungselements (40) zumindest von seiner Eingriffsposition (G) zu seiner Rückzugsposition (R).

6. Formstation nach einem der vorangehenden Ansprüche, **dadurch gekennzeichnet, dass** mehrere Führungselemente (40) vorhanden sind und das Formwerkzeugoberteil (21) einen gemeinsamen Mitnehmerantrieb (43) für alle Führungselemente (40) aufweist.

7. Formstation nach einem der Ansprüche 5 oder 6, **dadurch gekennzeichnet, dass** der Mitnehmerantrieb (43) an oder in einer Basisplatte (31) angeordnet ist, mit der die Stempelhalteplatte (26, 29) zur antriebsmäßigen Verbindung mit dem Stempelantrieb (28) lösbar verbindbar ist.

8. Formstation nach einem der Ansprüche 5 bis 7, **dadurch gekennzeichnet, dass** der Mitnehmerantrieb (43) mindestens einen Mitnehmerriegel (46) umfasst, der dazu konfiguriert ist, in eine Öffnung (42) eines Führungselements (40) einzutauchen.

9. Formstation nach Anspruch 8, **dadurch gekennzeichnet, dass** am Formwerkzeugoberteil (21), vorzugsweise an der Basisplatte (31), eine Kulisse (50) vorhanden ist, die konfiguriert ist zu einem Anheben des Mitnehmerriegels (46) bei einem Ausfahren des Mitnehmerriegels (46) und/oder zu einem Absenken des Mitnehmerriegels (46) bei einem Einfahren des Mitnehmerriegels (46).

10. Formstation nach Anspruch 9, **dadurch gekennzeichnet, dass** der Mitnehmerantrieb (43) einen Kolbenantrieb (44) aufweist, der bewegungsmäßig an das Anheben und/oder Absenken des mindestens einen Mitnehmerriegels (46) gekoppelt ist.

11. Formstation nach einem der vorangehenden Ansprüche, **dadurch gekennzeichnet, dass** die Stempelhalteplatte (26, 29) eine Aussparung (39) aufweist, in der das Mitnehmerelement (40) in seiner Rückzugsposition (R) aufgenommen ist.

12. Tiefziehverpackungsmaschine (1) mit einer Formstation (2) nach einem der vorangehenden Ansprüche.

13. Verfahren zum Wechseln eines an einer Stempelhalteplatte (26, 29) befestigten Formstempels (27) an einem Formwerkzeugoberteil (21) einer Formstation (2), mit zumindest folgenden Schritten:
- Ausfahren mindestens eines an einer ersten Stempelhalteplatte (26) vorgesehenen Führungselements (40) in eine Eingriffsposition (G), in der das Führungselement (40) in Eingriff steht mit einer an oder in einem Formdeckel (23) des Formwerkzeugoberteils (21) vorgesehenen Schiene (24), während sich die erste Stempelhalteplatte (26) in einer Bereitschaftsposition (B) innerhalb der Formstation (2) befindet,
- Bewegen der ersten Stempelhalteplatte (26) entlang der Schiene (24) bis in eine Entnahmeposition (E),
- Entnehmen der ersten Stempelhalteplatte (26) von der Formstation (2),
- Einsetzen einer zweiten Stempelhalteplatte (29) mit mindestens einem daran befestigten Formstempel (27) in die Schiene (24) an der Entnahmeposition (E), so dass sich mindestens ein an der zweiten Stempelhalteplatte (29) vorgesehenes Führungselement (40) in einer Eingriffsposition (G) im Eingriff mit der Schiene (24) befindet,
- Bewegen der zweiten Stempelhalteplatte (29) entlang der Schiene (24) bis in die Bereitschaftsposition (B) innerhalb der Formstation (2),
- Befestigen der zweiten Stempelhalteplatte (29) an einer Basisplatte (31) des Formwerkzeugoberteils (21),
- Nach dem Befestigen der zweiten Stempelhalteplatte (29) an der Basisplatte (31): Einfahren des mindestens einen an der zweiten Stempelhalteplatte (29) vorgesehenen Führungselements (40) in eine außerhalb der Schiene (24) befindliche Rückzugsposition (R).

14. Verfahren nach Anspruch 13, **dadurch gekennzeichnet, dass** an gegenüberliegenden Seiten (37, 39) der ersten oder der zweiten Stempelhalteplatte (26, 29) vorgesehene Führungselemente (40) jeweils synchron zueinander bewegt werden.

15. Verfahren nach Anspruch 13 oder 14, **dadurch gekennzeichnet, dass** das oder jedes Führungselement (40) zwischen seiner Eingriffsposition (G) und seiner Rückzugsposition (R) linear oder rotatorisch relativ zur Stempelhalteplatte (26, 29) bewegt wird.

## Claims

1. A forming station (2) for a thermoform packaging machine (1), comprising a forming tool upper part (21) with a die lid (23) and a forming tool lower part (22), wherein the forming tool upper part (21) comprises a male die part holding plate (26, 29), which has at least one male die part (27) fixed thereto and which is displaceable along at least one rail (24) provided on or in the die lid (23),
and wherein the forming station (2) comprises a male die part drive (28), which is drivingly connected to the male die part holding plate (26, 29) for generating a stroke movement (H) of the male die part holding plate (26, 29) relative to the die lid (23),
**characterized in that** the male die part holding plate (26, 29) has provided thereon at least one guide element (40), which is movable relative to the male die part holding plate (26, 29) between an engagement position (G), in which the guide element (40) is adapted to be brought into engagement with an associated rail (24), and a retracted position (R) in which the guide element (40) is out of engagement with the associated rail (24).

2. The forming station according to claim 1, **characterized in that** opposed sides (37, 38) of the male die part holding plate (26, 29) have each provided thereon a respective guide element (40) that is engageable with a respective associated rail (24).

3. The forming station according to claim 2, **characterized in that** the guide elements (40) on the opposed sides (37, 38) of the male die part holding plate (26, 29) are movable synchronously and in opposite directions relative to one another.

4. The forming station according to one of the preceding claims, **characterized in that** the at least one guide element (40) is biased towards its engagement position (G) by means of a spring (41).

5. The forming station according to one of the preceding claims, **characterized in that** the forming tool upper part (21) comprises a driver driving unit (43) configured for driving the at least one guide element (40) at least from its engagement position (G) to its retracted position (R).

6. The forming station according to one of the preceding claims, **characterized in that** a plurality of guide elements (40) is provided, and that the forming tool upper part (21) comprises a driver driving unit (43) which is common to all the guide elements (40).

7. The forming station according to one of the claims 5 or 6, **characterized in that** the driver driving unit (43) is arranged on or in a base plate (31) with which the male die part holding plate (26, 29) can releasably be connected for establishing a driving connection to the male die part drive (28).

8. The forming station according to one of the claims 5 to 7, **characterized in that** the driver driving unit (43) comprises at least one driver bar (46) configured for moving into an opening (42) of a guide element (40).

9. The forming station according to claim 8, **characterized in that** the forming tool upper part (21), preferably the base plate (31), has provided thereon a slotted link (50) configured for raising the driver bar (46) during extension of the driver bar (46) and/or for lowering the driver bar (46) during retraction of the driver bar (46).

10. The forming station according to claim 9, **characterized in that** the driver driving unit (43) comprises a piston drive (44), which is motion-coupled to the raising and/or lowering of the at least one driver bar (46).

11. The forming station according to one of the preceding claims, **characterized in that** the male die part holding plate (26, 29) comprises an opening (39) in which the guide element (40) is accommodated in its retracted position (R).

12. A thermoform packaging machine (1) comprising a forming station (2) according to one of the preceding claims.

13. A method of exchanging a male die part (27), which is fixed to a male die part holding plate (26, 29), on a forming tool upper part (21) of a forming station (2), the method comprising at least the following steps:
- extending at least one guide element (40), which is provided on a first male die part holding plate (26), to an engagement position (G) in which the guide element (40) is in engagement with a rail (24) provided on or in a die lid (23) of the forming tool upper part (21), while the first male die part holding plate (26) occupies a standby position (B) inside the forming station (2),
- moving the first male die part holding plate (26) along the rail (24) to a removal position (E),
- removing the first male die part holding plate (26) from the forming station (2),
- attaching a second male die part holding plate (29), which has at least one male die part (27) fixed thereto, to the rail (24) at the removal position (E), so that at least one guide element (40) provided on the second male die part holding plate (29) will be in engagement with the rail (24) in an engagement position (G),
- moving the second male die part holding plate (29) along the rail (24) to the standby position (B) inside the forming station (2),
- fixing the second male die part holding plate (29) to a base plate (31) of the forming tool upper part (21),
- after the second male die part holding plate (29) has been fixed to the base plate (31): retracting the at least one guide element (40) provided on the second male die part holding plate (29) to a retracted position (R) outside the rail (24).

14. The method according to claim 13, **characterized in that** respective guide elements (40) provided on opposed sides (37, 38) of the first or second male die part holding plate (26, 29) are moved synchronously with one another.

15. The method according to claim 13 or 14, **characterized in that** the guide element (40) or each guide element (40) is moved between its engagement position (G) and its retracted position (R) linearly or rotationally relative to the male die part holding plate (26, 29).

## Revendications

1. Station de formage (2) pour une machine d'emballage par thermoformage (1), avec une partie supérieure d'outil de formage (21) présentant une chape de formage (23) et une partie inférieure d'outil de formage (22), dans laquelle la partie supérieure d'outil de formage (21) présente une plaque porte-matrice (26, 29) avec au moins une matrice de formage (27) déplaçable le long d'au moins un rail (24) prévu sur ou dans la chape de formage (23),
et dans lequel la station de formage (2) présente un entraînement de matrice (28) relié en entraînement à la plaque porte-matrice (26, 29) afin de générer un mouvement de levage (H) de la plaque porte-matrice (26, 29) par rapport à la chape de formage (23),
**caractérisée en ce qu'**au niveau de la plaque porte-matrice (26, 29) est prévu au moins un élément de guidage (40) pouvant être réglé par rapport à la plaque porte-matrice (26, 29) entre une position de mise en prise (G) au sein de laquelle l'élément de guidage (40) peut être mis en prise avec un rail (24) associé et une position en retrait (R) au sein de laquelle l'élément de guidage (40) est hors de prise par rapport au rail (24) associé.

2. Station de formage selon la revendication 1, **caractérisée en ce que** sur les côtés opposés (37, 38) de la plaque porte-matrice (26, 29) est prévu respectivement un élément de guidage (40) qui peut être mis en prise respectivement avec un rail (24) associé.

3. Station de formage selon la revendication 2, **caractérisée en ce que** les éléments de guidage (40) peuvent être déplacés respectivement de manière synchrone et dans des sens opposés sur les côtés opposés (37, 38) de la plaque porte-matrice (26, 29).

4. Station de formage selon l'une quelconque des revendications précédentes, **caractérisée en ce que** le au moins un élément de guidage (40) est précontraint dans sa position de mise en prise (G) au moyen d'un ressort (41).

5. Station de formage selon l'une quelconque des revendications précédentes, **caractérisée en ce que** la partie supérieure d'outil de formage (21) présente un entraînement à cran d'entraînement (43) configuré pour entraîner le au moins un élément de guidage (40) au moins de sa position de mise en prise (G) jusqu'à sa position en retrait (R).

6. Station de formage selon l'une quelconque des revendications précédentes, **caractérisée en ce que** plusieurs éléments de guidage (40) sont présents et la partie supérieure d'outil de formage (21) présente un entraînement à cran d'entraînement (43) commun pour tous les éléments de guidage (40).

7. Station de formage selon la revendication 5 ou 6, **caractérisée en ce que** l'entraînement à cran d'entraînement (43) est agencé sur ou dans une plaque de base (31) à laquelle la plaque porte-matrice (26, 29) peut être reliée de manière amovible afin d'établir la liaison en entraînement avec l'entraînement de matrice (28).

8. Station de formage selon l'une quelconque des revendications 5 à 7, **caractérisée en ce que** l'entraînement à cran d'entraînement (43) comprend au moins une barre de cran d'entraînement (46) configurée pour pénétrer dans une ouverture (42) d'un élément de guidage (40).

9. Station de formage selon la revendication 8, **caractérisée en ce qu'une** coulisse (50), configurée pour lever la barre de cran d'entraînement (46) dans le cas d'une sortie de la barre de cran d'entraînement (46) et/ou pour abaisser la barre de cran d'entraînement (46) dans le cas d'une entrée de la barre de cran d'entraînement (46), est présente sur la partie supérieure d'outil de formage (21), de manière préférée sur la plaque de base (31).

10. Station de formage selon la revendication 9, **caractérisée en ce que** l'entraînement à cran d'entraînement (43) présente un entraînement à piston (44) qui est couplé dans son mouvement à la levée et/ou à l'abaissement de la au moins une barre de cran d'entraînement (46).

11. Station de formage selon l'une quelconque des revendications précédentes, **caractérisée en ce que** la plaque porte-matrice (26, 29) présente un évidement (39) au sein duquel l'élément de cran d'entraînement (40) est accueilli dans sa position en retrait (R).

12. Machine d'emballage par thermoformage (1) comprenant une station de formage (2) selon l'une quelconque des revendications précédentes.

13. Procédé d'échange d'une matrice de formage (27) fixée à une plaque porte-matrice (26, 29) au niveau d'une partie supérieure d'outil de formage (21) d'une station de formage (2), comprenant au moins les étapes ci-dessous :
- sortie d'au moins un élément de guidage (40), prévu au niveau d'une première plaque porte-matrice (26), dans une position de mise en prise (G) au sein de laquelle l'élément de guidage (40) est en prise avec un rail (24) prévu sur ou dans une chape de formage (23) de la partie supérieure d'outil de formage (21), tandis que la première plaque porte-matrice (26) se trouve dans une position d'attente (B) à l'intérieur de la station de formage (2),
- déplacement de la première plaque porte-matrice (26) le long du rail (24) jusqu'à une position d'extraction (E),
extraction de la première plaque porte-matrice (26) hors de la station de formage (2),
- insertion d'une seconde plaque porte-matrice (29), sur laquelle est fixée au moins une matrice de formage (27), dans le rail (24) au niveau de la position d'extraction (E), de sorte qu'au moins un élément de guidage (40) prévu au niveau de la seconde plaque porte-matrice (29) se trouve en prise avec le rail (24) dans une position de mise en prise (G),
- déplacement de la seconde plaque porte-matrice (29) le long du rail (24) jusqu'à la position d'attente (B) à l'intérieur de la station de formage (2),
- fixation de la seconde plaque porte-matrice (29) sur une plaque de base (31) de la partie supérieure d'outil de formage (21),
- après la fixation de la seconde plaque porte-matrice (29) sur la plaque de base (31) : entrée du au moins un élément de guidage (40) prévu au niveau de la seconde plaque porte-matrice (29) dans une position en retrait (R) située à l'extérieur du rail (24).

14. Procédé selon la revendication 13, **caractérisé en ce que** des éléments de guidage (40) prévus sur des côtés opposés (37, 39) de la première ou seconde plaque porte-matrice (26, 29) sont respectivement déplacés de manière synchrone les uns par rapport aux autres.

15. Procédé selon la revendication 13 ou 14, **caractérisé en ce que** le ou chaque élément de guidage (40) est déplacé de manière linéaire ou rotative par rapport à la plaque porte-matrice (26, 29) entre sa position de mise en prise (G) et sa position en retrait (R).
